# EUROPEAN PATENT APPLICATION

(11) **EP 4 057 164 A1**
(43) Date of publication of application: **14.09.2022**
(21) Application number: 19952012.3
(22) Date of filing: 05.11.2019
(51) Int. Cl.: G06F 16/9035

(54) **PROCESSING SYSTEM, PROCESSING METHOD, AND PROGRAM**

(71) Applicant: NEC Corporation, 108-8001 Tokyo (JP)
(72) Inventor: OTANI, Miki, Tokyo 108-8001 (JP); HIRAMOTO, Noriyuki, Tokyo 108-8001 (JP); TAGAWA, Risa, Tokyo 108-8001 (JP)
(74) Representative: Betten & Resch
(86) International application number: PCT/JP2019/043289
(87) International publication number: WO 2021/090367

(57) **Abstract**

The present invention provides a processing system (10) including an acquisition unit (11) that acquires, from each of a plurality of terminal apparatuses, first identification information for identifying the terminal apparatus or a facility where the terminal apparatus is placed, and biological information of a customer input to the terminal apparatus, an authentication unit (12) that performs customer authentication, based on the biological information of the customer, a history registration unit (13) that, when customer authentication is successful, registers, in visit history information of the customer, a facility determined by the first identification information, and a provided information generation unit (14) that generates, based on the visit history information and attribute information of the facility, provided information to be provided to the customer.

## Description

### [Technical Field]

The present invention relates to a processing system, a processing method, and a program.

### [Background Art]

Patent Document 1 discloses a technique for estimating a preference of a user, based on a visit history of a website by a user. Then, a technique for generating user-oriented information (an advertisement or the like), based on an estimated preference of a user is widely known.

### [Related Document]

### [Patent Document]

[Patent Document 1] Japanese Patent Application Publication No. 2017-97699

### [Disclosure of the Invention]

### [Technical Problem]

Since a website can be easily visited with one click, a user tends to also casually visit a site other than a site in which the user is truly interested. Thus, a visit history of a website by a user results in a mixture of a website dealing with information in which the user truly has interest, and a website dealing with information in which the user does not have much interest. When a preference of a user is estimated based on such a visit history of a website, accuracy of the estimation is not sufficient. As a result, user-oriented information (an advertisement or the like) generated based on an estimated preference of a user may become inappropriate information in which the user does not show much interest.

The present invention has been made in view of the problem described above, and is directed to generate user-oriented information (an advertisement or the like) in which a user shows interest.

### [Solution to Problem]

The present invention provides a processing system including:
an acquisition means for acquiring, from each of a plurality of terminal apparatuses, first identification information for identifying the terminal apparatus or a facility where the terminal apparatus is placed, and biological information of a customer input to the terminal apparatus;
an authentication means for performing customer authentication, based on the biological information of the customer;
a history registration means for, when customer authentication is successful, registering, in visit history information of the customer, a facility determined by the first identification information; and
a provided information generation means for generating, based on the visit history information and attribute information of the facility, provided information to be provided to the customer.

Moreover, the present invention provides a processing method including:
by a computer,
acquiring, from each of a plurality of terminal apparatuses, first identification information for identifying the terminal apparatus or a facility where the terminal apparatus is placed, and biological information of a customer input to the terminal apparatus;
performing customer authentication, based on the biological information of the customer;
when customer authentication is successful, registering, in visit history information of the customer, a facility determined by the first identification information; and
generating, based on the visit history information and attribute information of the facility, provided information to be provided to the customer.

Moreover, the present invention provides a program that causes a computer to function as:
an acquisition means for acquiring, from each of a plurality of terminal apparatuses, first identification information for identifying the terminal apparatus or a facility where the terminal apparatus is placed, and biological information of a customer input to the terminal apparatus;
an authentication means for performing customer authentication, based on the biological information of the customer;
a history registration means for, when customer authentication is successful, registering, in visit history information of the customer, a facility determined by the first identification information; and
a provided information generation means for generating, based on the visit history information and attribute information of the facility, provided information to be provided to the customer.

### [Advantageous Effects of Invention]

The present invention enables generating user-oriented information (an advertisement or the like) in which a user shows interest.

### [Brief Description of the Drawings]

The above-described object, other objects, features, and advantages effects will become more apparent from a preferred example embodiment described below and the following accompanying drawings.
[Fig. 1] Fig. 1 is a conceptual diagram for describing an outline of processing of a processing system according to the present example embodiment.
[Fig. 2] Fig. 2 is a diagram illustrating one example of a hardware configuration of the processing system according to the present example embodiment.
[Fig. 3] Fig. 3 is one example of a functional block diagram of the processing system according to the present example embodiment.
[Fig. 4] Fig. 4 is a diagram schematically illustrating one example of information to be processed by the processing system according to the present example embodiment.
[Fig. 5] Fig. 5 is a diagram schematically illustrating one example of information to be processed by the processing system according to the present example embodiment.
[Fig. 6] Fig. 6 is a diagram schematically illustrating one example of information to be processed by the processing system according to the present example embodiment.
[Fig. 7] Fig. 7 is a diagram schematically illustrating one example of information to be processed by the processing system according to the present example embodiment.
[Fig. 8] Fig. 8 is a diagram schematically illustrating one example of information to be processed by the processing system according to the present example embodiment.
[Fig. 9] Fig. 9 is a flowchart illustrating one example of a flow of processing of the processing system according to the present example embodiment.
[Fig. 10] Fig. 10 is one example of a functional block diagram of the processing system according to the present example embodiment.
[Fig. 11] Fig. 11 is one example of a screen provided by the processing system according to the present example embodiment.
[Fig. 12] Fig. 12 is one example of a screen provided by the processing system according to the present example embodiment.
[Fig. 13] Fig. 13 is one example of a screen provided by the processing system according to the present example embodiment.
[Fig. 14] Fig. 14 is one example of a screen provided by the processing system according to the present example embodiment.

### [Description of Embodiments]

### <First Example Embodiment

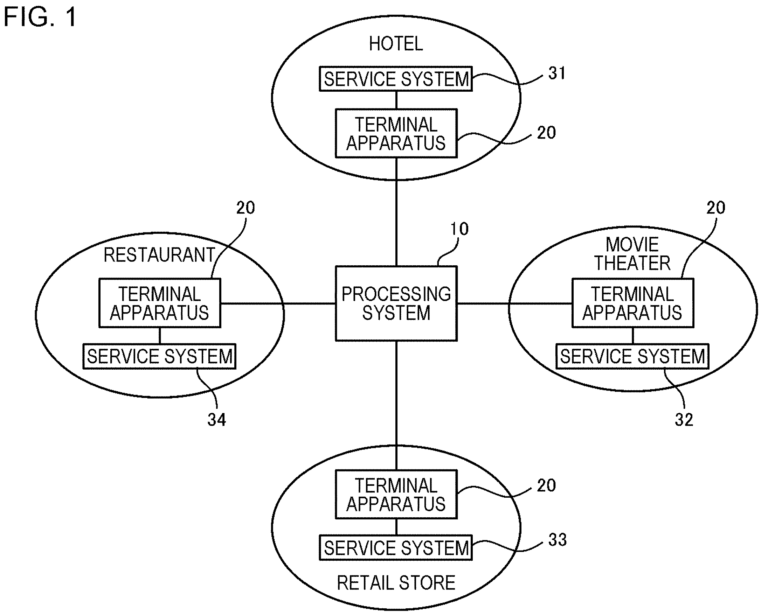

First, a broad overview and an outline of a processing system 10 according to the present example embodiment are described by use of Fig. 1. Service systems 31 to 34 are placed in a plurality of facilities run by each of a plurality of business entities. Each of the service systems 31 to 34 is a system that provides a predetermined service for a customer for whom customer authentication using biological information is successful, and a content of a service differs from facility to facility. For example, the service system 31 placed in a hotel may execute check-in processing or check-out processing for a customer for whom customer authentication is successful. Moreover, the service systems 33 and 34 each placed in a restaurant or a retail store may execute accounting processing for a customer for whom customer authentication is successful. Moreover, the service system 32 placed in a movie theater may execute ticket issuance processing, selling processing, or the like for a customer for whom customer authentication is successful, or may execute processing of opening a gate for entering the movie theater. Note that, a kind of facility, or a content of processing performed for a customer for whom customer authentication is successful is only one example, and there is no limitation to exemplification herein.

Then, in the present example embodiment, each of the service systems 31 to 34 does not perform customer authentication using biological information, but the processing system 10 collectively performs customer authentication. In other words, a terminal apparatus 20 that accepts input of biological information from a customer is placed in each facility. Then, the terminal apparatus 20 transmits the input biological information to the processing system 10. The processing system 10 performs customer authentication, based on the received biological information, and returns an authentication result to the terminal apparatus 20. Each of the service systems 31 to 34 acquires the authentication result from the terminal apparatus 20, and executes processing according to the authentication result.

Moreover, when customer authentication is successful, the processing system 10 registers, in visit history information of the customer, a facility that has transmitted biological information. In this way, visit history information of a real store that has performed customer authentication using biological information can be generated. Then, the processing system 10 generates, based on such visit history information and attribute information of a facility, provided information to be provided to a customer.

There is a high possibility that a real store that has performed even customer authentication by use of biological information is a facility in which the customer truly has interest. The processing system 10 that generates provided information to be provided to a customer, based on visit history information of a real store that has performed customer authentication by use of such biological information, enables generating, with high accuracy, user-oriented information (an advertisement or the like) in which a user shows interest.

Next, one example of a hardware configuration of the processing system 10 is described. Each functional unit included in the processing system 10 is achieved by any combination of hardware and software mainly including a central processing unit (CPU) of any computer, a memory, a program loaded onto the memory, a storage unit such as a hard disk that stores the program (that can store not only a program previously stored from a phase of shipping an apparatus but also a program downloaded from a storage medium such as a compact disc (CD) or a server or the like on the Internet), and an interface for network connection. Then, it is appreciated by a person skilled in the art that there are a variety of modified examples of a method and an apparatus for the achievement.

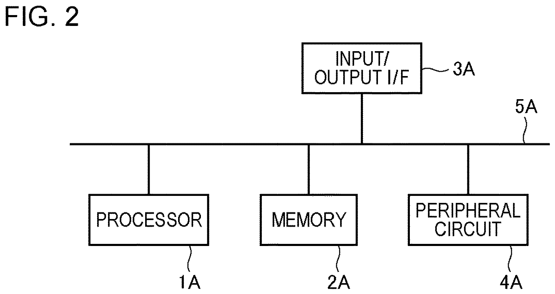

Fig. 2 is a block diagram illustrating a hardware configuration of the processing system 10. As illustrated in Fig. 2, the processing system 10 includes a processor 1A, a memory 2A, an input/output interface 3A, a peripheral circuit 4A, and a bus 5A. The peripheral circuit 4A includes various modules. The processing system 10 may not include the peripheral circuit 4A. Note that, the processing system 10 may be configured by a plurality of physically and/or logically separated apparatuses, or may be configured by one physically and/or logically integrated apparatus. When the processing system 10 is configured by a plurality of physically and/or logically separated apparatuses, each of the plurality of apparatuses may include the hardware configuration described above.

The bus 5A is a data transmission path for the processor 1A, the memory 2A, the peripheral circuit 4A, and the input/output interface 3A to mutually transmit and receive data. The processor 1A is, for example, an arithmetic processing apparatus such as a CPU and a graphics processing unit (GPU). The memory 2A is, for example, a memory such as a random access memory (RAM) and a read only memory (ROM). The input/output interface 3A includes an interface for acquiring information from an input apparatus, an external apparatus, an external server, an external sensor, a camera, and the like, an interface for outputting information to an output apparatus, an external apparatus, an external server, and the like, and the like. The input apparatus is, for example, a keyboard, a mouse, a microphone, a physical button, a touch panel, and the like. The output apparatus is, for example, a display, a speaker, a printer, a mailer, and the like. The processor 1A can give an instruction to each of modules, and perform an arithmetic operation, based on an arithmetic result of each of the modules.

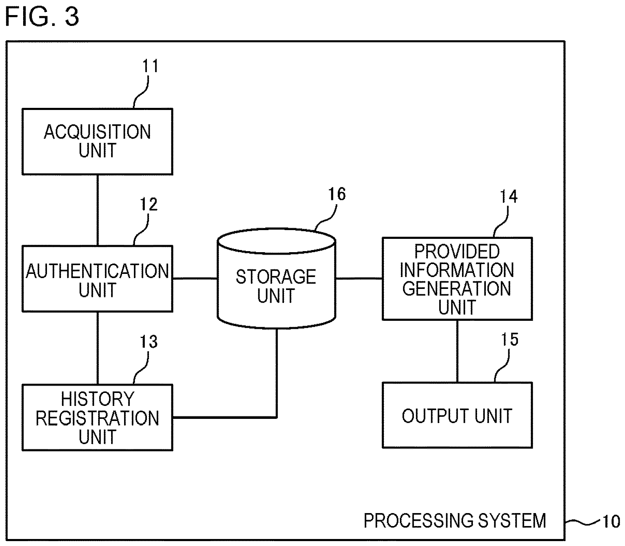

Next, a functional configuration of the processing system 10 is described. Fig. 3 illustrates one example of a functional block diagram of the processing system 10. As illustrated, the processing system 10 includes an acquisition unit 11, an authentication unit 12, a history registration unit 13, a provided information generation unit 14, an output unit 15, and a storage unit 16. Note that, the processing system 10 may not include the storage unit 16. In this case, an external apparatus configured communicably with the processing system 10 includes the storage unit 16.

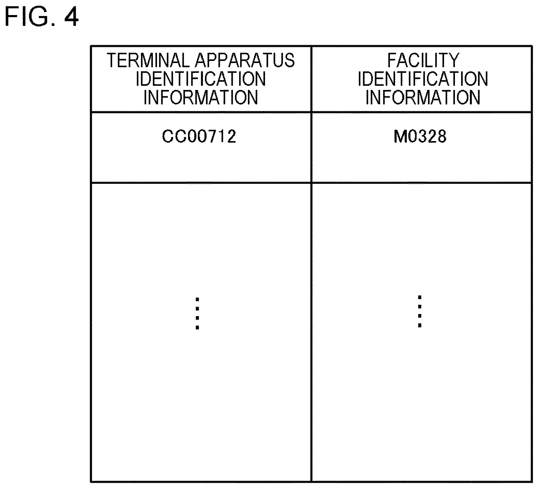

The storage unit 16 stores various pieces of information. First, as illustrated in Fig. 4, the storage unit 16 stores information associating identification information (terminal apparatus identification information) of the terminal apparatus 20 with identification information (facility identification information) of a facility where each of the terminal apparatuses 20 is placed.

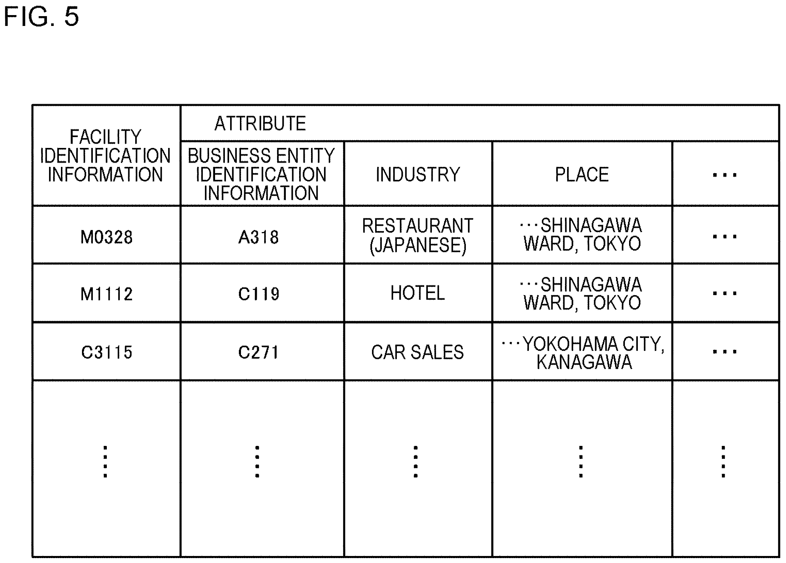

Moreover, as illustrated in Fig. 5, the storage unit 16 stores information associating facility identification information with attribute information of each facility. Attribute information is exemplified by, but not limited to, identification information (business entity identification information) of a business entity running each facility, an industry of a service provided in a facility, information (address) indicating a place where a facility exists, and the like.

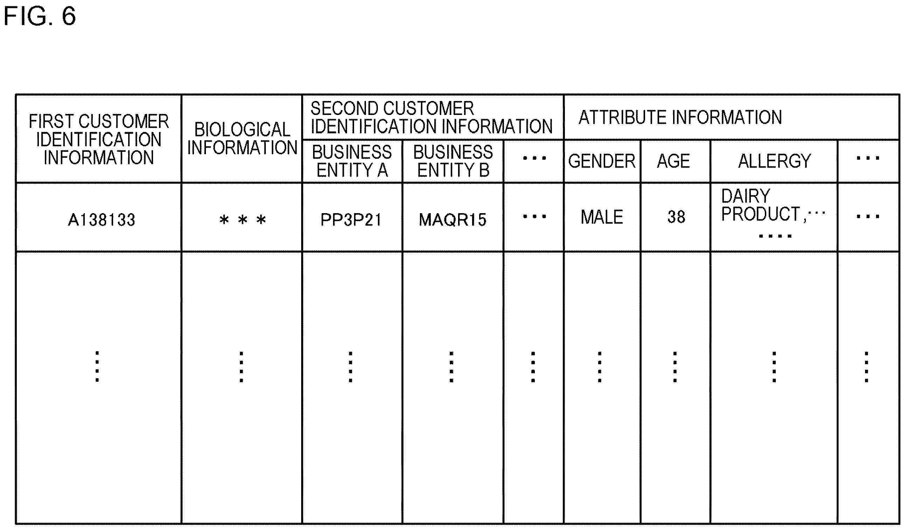

Moreover, as illustrated in Fig. 6, the storage unit 16 stores information relating to a customer. In an illustrated example, first customer identification information, biological information, second customer identification information, and attribute information are associated with one another.

The first customer identification information is information for identifying a customer in a service provided by the processing system 10.

The second customer identification information is information for identifying a customer in a service provided by each of a plurality of business entities running each of a plurality of facilities.

Biological information is exemplified by, but not limited to, a face image, an iris, a fingerprint, a voiceprint, and the like.

Attribute information is information indicating an attribute of a customer, and is exemplified by, but not limited to, gender, an age, presence or absence of an allergy, an address, a nationality, and the like.

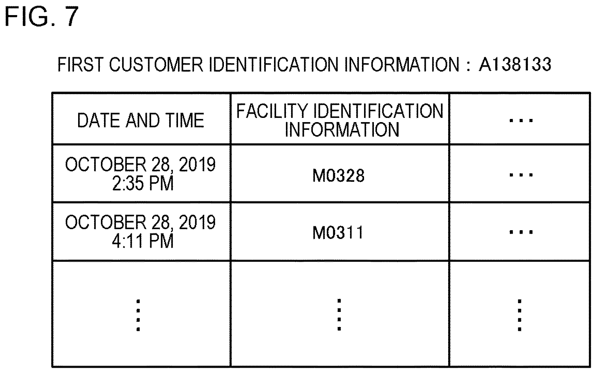

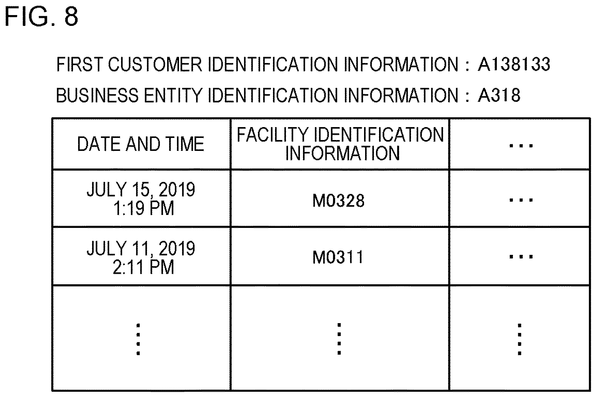

Moreover, as illustrated in Figs. 7 and 8, the storage unit 16 stores visit history information of a real store that has performed customer authentication using biological information. In an illustrated example, a date and time of visiting and facility identification information of a visited facility are associated with each other. Fig. 7 is visit history information including visit history to all facilities, and Fig. 8 is visit history information restricted to only a facility run by a certain business entity.

Returning to Fig. 3, the acquisition unit 11 acquires, from each of a plurality of the terminal apparatuses 20, first identification information for identifying a facility where each of the terminal apparatuses 20 is placed, and biological information of a customer input to the terminal apparatus 20. The first identification information is identification information of the terminal apparatus 20, or identification information of a facility where the terminal apparatus 20 is placed.

As described by use of Fig. 1, the terminal apparatus 20 is placed in a plurality of facilities. Then, a customer who has visited a facility performs an operation for customer authentication on the terminal apparatus 20, in order to receive a predetermined service in the facility. Specifically, a customer operates the terminal apparatus 20, and inputs his/her biological information. The terminal apparatus 20 includes a means for accepting input of biological information, a means for transmitting the biological information to the processing system 10, and a means for receiving a result of customer authentication based on the biological information. The means for accepting input of biological information is achieved by use of any input apparatus such as a camera, fingerprint sensor, or a microphone.

The authentication unit 12 performs customer authentication, based on biological information of a customer acquired by the acquisition unit 11. For example, the authentication unit 12 collates a predetermined feature value extracted from biological information of a customer acquired by the acquisition unit 11, with a predetermined feature value extracted from biological information (see Fig. 6) of each customer stored by the storage unit 16, and thereby confirms whether biological information matching the biological information of the customer acquired by the acquisition unit 11 is registered in the storage unit 16. Then, when the biological information is registered, the customer is determined to be a proper customer (successful authentication), whereas when the biological information is not registered, the customer is determined not to be a proper customer (unsuccessful authentication).

As another example, the authentication unit 12 may perform customer authentication of determining whether a customer who has input biological information to the terminal apparatus 20 in a certain facility is a customer being proper for a business entity running the facility. Specifically, when biological information matching biological information of a customer acquired by the acquisition unit 11 is registered in the storage unit 16, the authentication unit 12 refers to information in Fig. 6 relating to the customer. Then, the authentication unit 12 confirms whether second customer identification information is registered in association with a business entity running a facility where the terminal apparatus 20 that has transmitted biological information of a customer is placed. When second customer identification information is registered, the customer is determined to be a customer proper for the business entity (successful authentication), whereas when second customer identification information is not registered, the customer is determined not to be a customer proper for the business entity (unsuccessful authentication).

The authentication unit 12 transmits an authentication result ("successful authentication" or "unsuccessful authentication") to the terminal apparatus 20. Each of the service systems 31 to 34 placed in a facility executes processing according to the authentication result received by the terminal apparatus 20. One example of processing performed when customer authentication is successful is as described above (check-in processing or the like). On the other hand, when customer authentication is successful, error processing is executed. For example, a customer is notified of a fact that customer authentication is unsuccessful, via an output apparatus such as a display or a speaker.

When customer authentication is successful, the history registration unit 13 registers, in visit history information of the customer, a facility determined by first identification information acquired by the acquisition unit 11. The registration processing updates such visit history information as illustrated in Fig. 7 or 8.

The provided information generation unit 14 generates, based on visit history information (see Figs. 7 and 8), and attribute information (see Fig. 5) of a facility, provided information to be provided to a customer. Further, the provided information generation unit 14 can generate, based on attribute information (see Fig. 6) of a customer, provided information to be provided to a customer. For example, the provided information generation unit 14 can generate an advertisement as provided information.

For example, the provided information generation unit 14 may estimate a preference of a customer, based on attribute information of a visited facility indicated by visit history information, or attribute information of a customer. Then, the provided information generation unit 14 may generate an advertisement suited to a preference of the customer, based on an estimation result. An estimation method of a preference, and a generation method of an advertisement suited to each preference are achieved by utilizing any technique.

Moreover, the provided information generation unit 14 may recognize a current position of a customer, based on visit history information. Then, the provided information generation unit 14 may generate an advertisement of a facility (ex: a facility within a predetermined distance from a current position) around the current position, as provided information to be provided to a customer. Moreover, the provided information generation unit 14 may generate an advertisement of a facility around the current position and suited to the estimated preference of the customer described above, as provided information to be provided to a customer. Moreover, the provided information generation unit 14 may generate provided information to be provided to a customer, based on an attribute of a facility first or last visited by a customer, or an order in which a customer has visited each facility.

The output unit 15 provides a customer with provided information generated by the provided information generation unit 14. The output unit 15 may provide a customer with provided information, via, for example, an application installed in a portable terminal (ex: a smartphone, a tablet terminal, a smartwatch, a mobile telephone, or the like) of a customer, or another means.

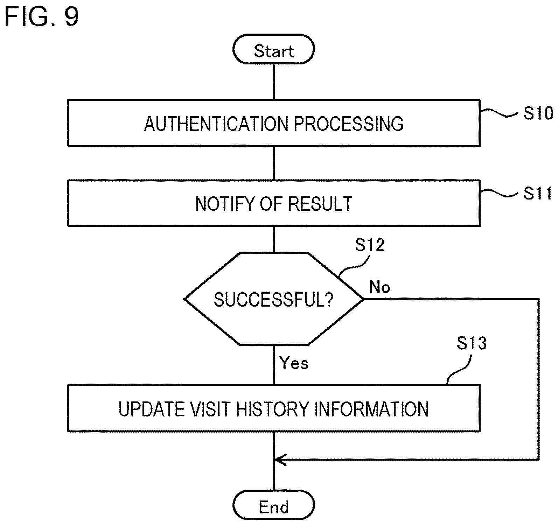

Next, one example of a flow of processing of the processing system 10 is described by use of a flowchart in Fig. 9. When the acquisition unit 11 receives, from the terminal apparatus 20, biological information of a customer, and first identification information for identifying the terminal apparatus 20, processing in Fig. 9 is executed.

First, the authentication unit 12 performs customer authentication, based on the biological information of the customer acquired by the acquisition unit 11 (S10), and transmits an authentication result to the terminal apparatus 20 (S11). Each of the service systems 31 to 34 in each facility executes processing according to the authentication result.

Next, when customer authentication is successful (Yes in S12), the history registration unit 13 updates visit history information of the customer (S13). Specifically, the history registration unit 13 registers, in visit history information of the customer, a facility determined by first identification information acquired by the acquisition unit 11. Then, the processing ends.

On the other hand, when customer authentication is unsuccessful (No in S12), visit history information is not updated, and the processing ends.

Next, an advantageous effect of the processing system 10 according to the present example embodiment is described. The processing system 10 can generate visit history information of a real store that has performed customer authentication using biological information. Then, the processing system 10 generates, based on such visit history information and attribute information of a facility, provided information to be provided to a customer.

There is a high possibility that a real store that has performed even customer authentication by use of biological information is a facility in which the customer truly has interest. The processing system 10 that generates provided information to be provided to a customer, based on visit history information of a real store that has performed customer authentication by use of such biological information, enables generating, with high accuracy, user-oriented information (an advertisement or the like) in which a user shows interest.

Moreover, the processing system 10 manages biological information of each customer, manages information integrating identification information of a customer in a service provided by the processing system 10 with identification information of a customer provided by each business entity, and performs, for the business entity, a service of performing customer authentication by utilizing the pieces of information.

By utilizing such a service, it becomes unnecessary for a business entity to include, on its own, a system for performing customer authentication based on biological information. As a result, a burden of an equipment expense is lightened. Moreover, a business entity no longer needs to manage, on its own, biological information of a customer. As a result, a security protection responsibility of information is lightened. For example, with such an advantage, an increase in the number of business entities receiving a service provided by the processing system 10 is expected. Then, as the number of business entities receiving a service provided by the processing system 10 increases, it becomes easier to collect visit history information of a customer. In this way, the processing system 10 includes a configuration that facilitates collection of visit history information of a customer.

### <Second Example Embodiment

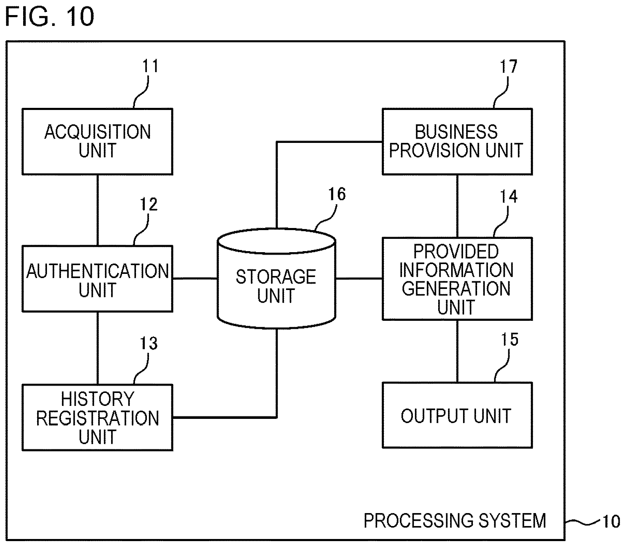

Fig. 10 illustrates one example of a functional block diagram of a processing system 10 according to the present example embodiment. As illustrated, the processing system 10 according to the present example embodiment differs from the processing system 10 according to the first example embodiment in including a business entity provision unit 17.

As described in the first example embodiment, a history registration unit 13 can generate, for each customer, visit history information indicating a visit history to a facility run by each business entity (see Fig. 8). In other words, the history registration unit 13 can generate, for each business entity, visit history information indicating, for each customer, a visit history to one or a plurality of facilities run by each business entity.

Then, the business entity provision unit 17 provides each business entity with visit history information of each customer generated for each business entity. Note that, as illustrated in Fig. 8, visit history information is registered in association with first customer identification information for identifying a customer in a service provided by the processing system 10. Accordingly, the business entity provision unit 17 may include a means for converting the first customer identification information into second customer identification information for identifying a customer in a service provided by the business entity, and providing the business entity with visit history information in association with the second customer identification information. For example, the business entity provision unit 17 may acquire second customer identification information being associated with first customer identification information, from information (see Fig. 6) associating the first customer identification information with the second customer identification information utilized in order for a business entity to identify a customer, and provide the business entity with the acquired second customer identification information in association with visit history information.

Provision of visit history information to a business entity may be achieved via an application, a website, or the like, may be achieved by an e-mail, or may be achieved by another means.

Other components of the processing system 10 are similar to those according to the first example embodiment.

As above, the processing system 10 according to the present example embodiment achieves an advantageous effect similar to that of the processing system 10 according to the first example embodiment.

Moreover, the processing system 10 according to the present example embodiment can provide each business entity with information indicating a visit history of each customer to a facility run by each business entity. In this way, the processing system 10 according to the present example embodiment can utilize visit history information not only for a purpose of generating provided information but also for a purpose of providing information useful for a business entity. Then, since providing information useful for a business entity becomes possible, an increase in the number of business entities receiving a service provided by the processing system 10 is expected. Then, as the number of business entities receiving a service provided by the processing system 10 increases, it becomes easier to collect visit history information of a customer.

### <Modified Example>

Herein, a modified example being applicable to the processing system 10 according to each of the first and second example embodiments is described. The processing system 10 may provide a settlement service. For example, a customer and a business entity can utilize the settlement service at payment in a facility. Details of a settlement service via the web are not particularly limited, and any technique can be adopted.

Note that, for a security improvement, a terminal apparatus 20 may accept user input of additional information, in addition to biological information. Additional information is a pattern, a password, or the like. Additional information is previously registered in association with each customer. Then, when customer authentication by an authentication unit 12 is successful, and additional information registered in association with the customer matches the additional information received from the terminal apparatus 20, the processing system 10 may execute settlement processing for an amount received from the terminal apparatus 20.

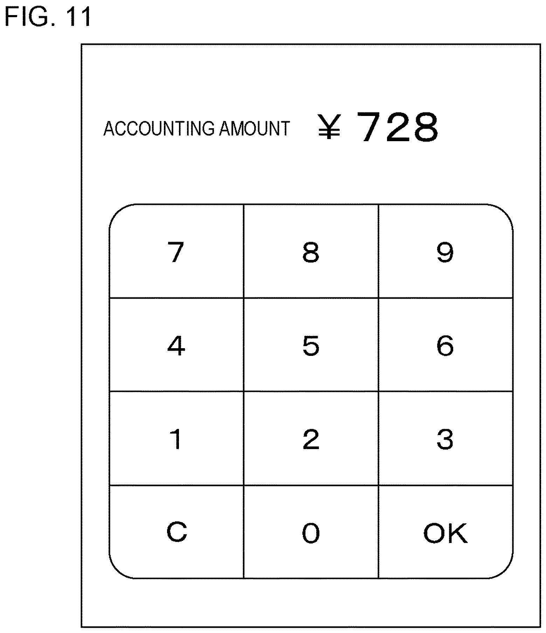

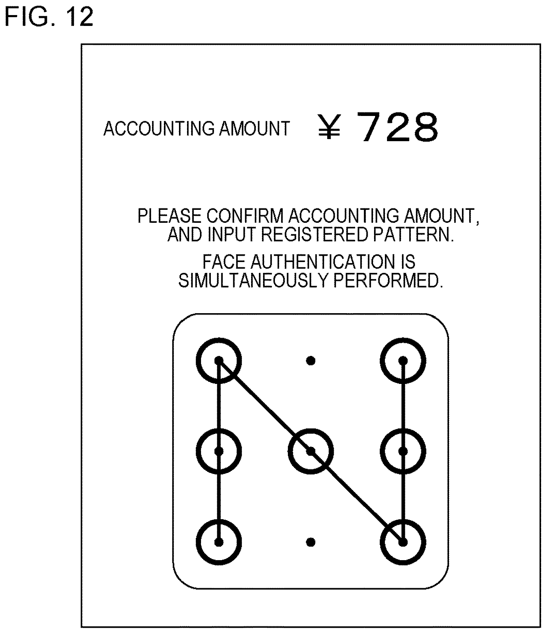

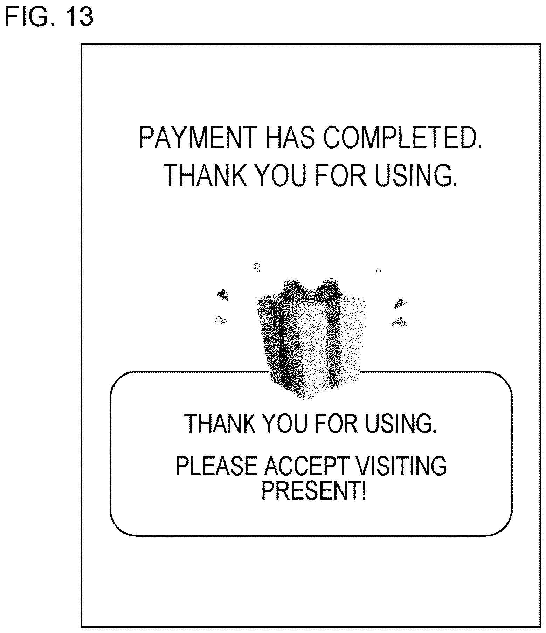

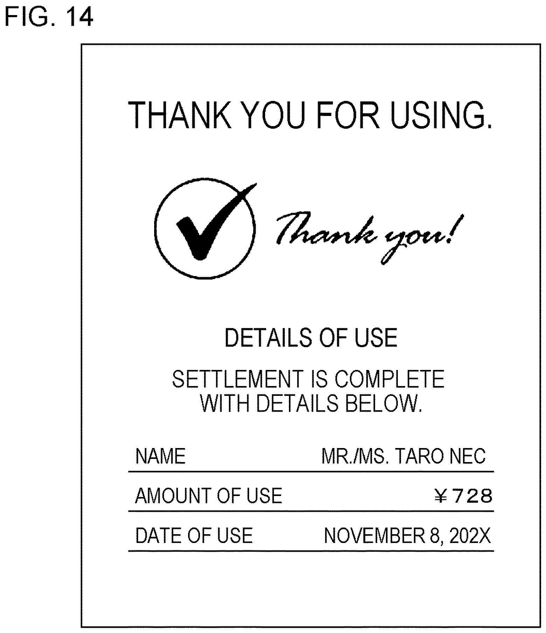

Herein, one example of a screen displayed on a display in the settlement service is illustrated. Fig. 11 is a screen in which an accounting amount is input. For example, a clerk or a customer inputs an accounting amount. Fig. 12 is a screen in which a customer inputs additional information. In the example, a pattern is input as additional information. Each of Figs. 13 and 14 is one example of a screen displayed after completion of a settlement.

In this way, the processing system 10 provides a settlement service, and thereby, an increase in the number of business entities receiving a service provided by the processing system 10 is expected. Then, as the number of business entities receiving a service provided by the processing system 10 increases, it becomes easier to collect visit history information of a customer. Moreover, since the processing system 10 performs collation of additional information in addition to customer authentication based on biological information, security also improves.

While the invention of the present application has been described above with reference to the example embodiments (and examples), the invention of the present application is not limited to the example embodiments (and examples) described above. Various modifications understandable to a person skilled in the art can be made to a configuration and details of the invention of the present application within the scope of the invention of the present application.

Some or all of the above-described example embodiments can also be described as, but are not limited to, the following supplementary notes.
1. A processing system including:
   an acquisition means for acquiring, from each of a plurality of terminal apparatuses, first identification information for identifying the terminal apparatus or a facility where the terminal apparatus is placed, and biological information of a customer input to the terminal apparatus;
   an authentication means for performing customer authentication, based on the biological information of the customer;
   a history registration means for, when customer authentication is successful, registering, in visit history information of the customer, a facility determined by the first identification information; and
   a provided information generation means for generating, based on the visit history information and attribute information of the facility, provided information to be provided to the customer.
2. The processing system according to supplementary note 1, wherein
   the provided information generation means generates an advertisement as the provided information.
3. The processing system according to supplementary note 1 or 2, wherein
   the provided information generation means generates the provided information, further based on attribute information of the customer.
4. The processing system according to any one of supplementary notes 1 to 3, wherein
   the history registration means generates the visit history information of each of the customers for each of the business entities, and
   the processing system further including
   a business entity provision means for providing each of the business entities with the visit history information of each of the customers generated for each of the business entities.
5. The processing system according to supplementary note 4, wherein
   the visit history information is registered in association with first customer identification information for identifying the customer, and
   the business entity provision means acquires second customer identification information being associated with the first customer identification information, from information associating the first customer identification information with the second customer identification information utilized in order for the business entity to identify the customer, and provides the second customer identification information in association with the visit history information.
6. A processing method including:
   by a computer,
   acquiring, from each of a plurality of terminal apparatuses, first identification information for identifying the terminal apparatus or a facility where the terminal apparatus is placed, and biological information of a customer input to the terminal apparatus;
   performing customer authentication, based on the biological information of the customer;
   when customer authentication is successful, registering, in visit history information of the customer, a facility determined by the first identification information; and
   generating, based on the visit history information and attribute information of the facility, provided information to be provided to the customer.
7. A program that causes a computer to function as:
   an acquisition means for acquiring, from each of a plurality of terminal apparatuses, first identification information for identifying the terminal apparatus or a facility where the terminal apparatus is placed, and biological information of a customer input to the terminal apparatus;
   an authentication means for performing customer authentication, based on the biological information of the customer;
   a history registration means for, when customer authentication is successful, registering, in visit history information of the customer, a facility determined by the first identification information; and
   a provided information generation means for generating, based on the visit history information and attribute information of the facility, provided information to be provided to the customer.

## Claims

1. A processing system comprising:
acquisition means for acquiring, from each of a plurality of terminal apparatuses, first identification information for identifying the terminal apparatus or a facility where the terminal apparatus is placed, and biological information of a customer input to the terminal apparatus;
authentication means for performing customer authentication, based on the biological information of the customer;
history registration means for, when customer authentication is successful, registering, in visit history information of the customer, a facility determined by the first identification information; and
provided information generation means for generating, based on the visit history information and attribute information of the facility, provided information to be provided to the customer.

2. The processing system according to claim 1, wherein
the provided information generation means generates an advertisement as the provided information.

3. The processing system according to claim 1 or 2, wherein
the provided information generation means generates the provided information, further based on attribute information of the customer.

4. The processing system according to any one of claims 1 to 3, wherein
the history registration means generates the visit history information of each of the customers for each of the business entities, and
the processing system further including
business entity provision means for providing each of the business entities with the visit history information of each of the customers generated for each of the business entities.

5. The processing system according to claim 4, wherein
the visit history information is registered in association with first customer identification information for identifying the customer, and
the business entity provision means acquires second customer identification information being associated with the first customer identification information, from information associating the first customer identification information with the second customer identification information utilized in order for the business entity to identify the customer, and provides the second customer identification information in association with the visit history information.

6. A processing method comprising:
by a computer,
acquiring, from each of a plurality of terminal apparatuses, first identification information for identifying the terminal apparatus or a facility where the terminal apparatus is placed, and biological information of a customer input to the terminal apparatus;
performing customer authentication, based on the biological information of the customer;
when customer authentication is successful, registering, in visit history information of the customer, a facility determined by the first identification information; and
generating, based on the visit history information and attribute information of the facility, provided information to be provided to the customer.

7. A program that causes a computer to function as:
acquisition means for acquiring, from each of a plurality of terminal apparatuses, first identification information for identifying the terminal apparatus or a facility where the terminal apparatus is placed, and biological information of a customer input to the terminal apparatus;
authentication means for performing customer authentication, based on the biological information of the customer;
history registration means for, when customer authentication is successful, registering, in visit history information of the customer, a facility determined by the first identification information; and
provided information generation means for generating, based on the visit history information and attribute information of the facility, provided information to be provided to the customer.
